# EUROPEAN PATENT APPLICATION

(11) **EP 1 641 313 A1**
(43) Date of publication of application: **29.03.2006**
(21) Application number: 05710054.7
(22) Date of filing: 10.02.2005
(51) Int. Cl.: H04R 5/02, H04R 1/02

(54) **INFORMATION TERMINAL DEVICE**

(30) Priority: 24.02.2004 JP 2004047271
(71) Applicant: Matsushita Electric Industries Co., Ltd., Kadoma-shi, Osaka 571-8501 (JP)
(72) Inventor: TOMOEDA, Shigeru, Tsu-shi, Mie 514-0304 (JP); SUMIYAMA, Masahide, Matsusaka-shi, Mie 515-0045 (JP); NAKANO, Masanori, Ise-shi, Mie 516-0074 (JP)
(74) Representative: Balsters, Robert
(86) International application number: PCT/JP2005/002002
(87) International publication number: WO 2005/081579

(57) **Abstract**

An information terminal device (10) comprises a main body case (50), a rectangular video display unit (60) provided on the front side of the main body case (50), and a plurality of audio output units (81, 82) disposed at a specified angle to the video display unit (60) and formed in any one of rectangular, elliptical and track shape. Herein, the plurality of audio output units (81, 82) are disposed symmetrically to the center line (61) of the video display unit (60), and the longer side or longer diameter of the outer shape of each audio output unit (81, 82) is disposed closely to either one of the mutually opposing longer side and shorter side of the video display unit (60).

## Description

### TECHNICAL FIELD

The present invention relates to mobile telephone, personal digital assistant (PDA), game machine, and other information terminal device used in various information communications.

### BACKGROUND ART

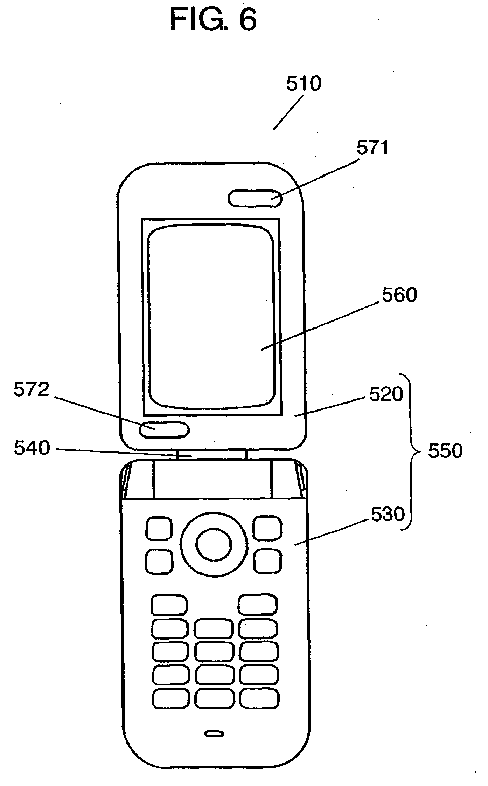

A conventional information terminal device is explained by referring to Fig. 6. Fig. 6 is a front view of a conventional information terminal device. The information terminal device shown in Fig. 6 is specifically a foldable mobile telephone, shown in an unfolded state.

In Fig. 6, conventional information terminal device 510 comprises upper case 520, lower case 530, and main body case 550 coupling them by means of linkage 540. Upper case 520 includes rectangular video display unit 560 provided on the front side, and audio output units 571, 572 provided on the same plane as video display unit 560. These audio output units 571, 572 are speakers disposed closely to two corners opposite to diagonal lines of video display unit 560. One channel of stereophonic sound is reproduced from one speaker, and other channel of stereophonic sound is reproduced from other one.

A prior art of the invention is disclosed, for example, in Japanese patent unexamined publication No. 2003-78601.

However, the information terminal device having such conventional configuration had difficulties in reproducing reality and presence by stereophonic acoustics in stereophonic sound reproduction.

A cause is disagreement between video localization of video display unit 560 and audio localization in vertical direction of audio output units 571, 572. Audio output units 571, 572 are disposed closely to two corners opposite to diagonal lines of video display unit 560. That is, audio output units 571, 572 are disposed symmetrical in a diagonal form to video display unit 560.

At this time, the audio localization of audio output units 571, 572 is in the center of a straight line linking two speakers. The straight line linking the audio output units 571, 572 is nearly parallel to a diagonal line on upper case 520. The video localization of video display unit 560 is also in the center of a rectangular screen, and the video localization coincides with the audio localization. However, this coincidence of video localization and audio localization is limited only in the condition where the output sound pressure levels from right and left speakers are equal to each other. In this limited condition, the audio image is localized in the central position of right and left speakers, and coincides with the video localization of video display unit 560. In reality, however, the speakers are very rarely operated in such condition.

When audio data is reproduced from audio output units 571, 572, audio signals changing every moment always cause output sound pressure level differences in the right and left speakers. When output sound pressure level difference are caused in the fight and left speakers, the audio image is not localized in the center of the screen, and is deviated to either right or left side of higher sound pressure level. Due to difference in sound pressure levels of right and left speakers, the audio image comes to have a depth, and the audio localization can be moved along with the move of the video localization.

However, when the audio localization moves on a straight line between the right and left speakers by such change in sound pressure levels, in the conventional configuration, since the straight line linking the right and left speakers is not horizontal, a problem lies in localization in height direction. That is, the audio localization is also moved in the height direction by the portion of deviation from the center to either upper or lower side. This is sensed because the human audible sense works in both lateral direction and vertical direction.

Therefore, for the user of the information terminal device, the video localization of video display unit and audio localization of the audio output units do not coincide in the vertical direction. That is, the direction sense to video and direction sense to audio do not coincide, and strangeness is felt in hearing sensation. As a result, the conventional information terminal can hardly satisfy the reality and presence by stereophonic acoustics in stereophonic reproduction.

### DISCLOSURE OF THE INVENTION

The information terminal device of the invention comprises a main body case, a rectangular video display unit provided on the front side of the main body case, and a plurality of audio output units disposed at a specified angle to the video display unit and formed in any one of rectangular, elliptical and track shape. The plurality of audio output units are disposed symmetrically to the center line of the video display unit, and the longer side or longer diameter of the outer shape of each audio output unit is disposed closely to either one of the mutually opposing longer side and shorter side of the video display unit.

In this configuration, the speaker effect of the information terminal device of the invention reproduces a favorable reality and presence by stereophonic acoustics in stereophonic reproduction. That is, since the audio output units are disposed symmetrically on the center line of the video display unit, the audio localization in vertical direction of audio output units coincides with the video localization in vertical direction of video display unit. As a result, the invention satisfies the reality and presence by stereophonic acoustics in stereophonic reproduction.

### BRIEF DESCRIPTION OF THE DRAWINGS

Fig. 1 is a front view of information terminal device in preferred embodiment 1 of the invention.
Fig. 2 is an essential sectional view of information terminal device in preferred embodiment 1 of the invention.
Fig. 3 is a front view of other example of preferred embodiment 1 of the invention.
Fig. 4A is a front view of information terminal device in preferred embodiment 2 of the invention.
Fig. 4B is a front view of rotating state of upper case of information terminal device shown in Fig. 4A.
Fig. 5 is a front view of information terminal device in preferred embodiment 3 of the invention.
Fig. 6 is a front view of information terminal device in a prior art.

### Reference numerals in the drawings

- 10: Information terminal device
- 20: Upper case
- 30: Lower case
- 40: Linkage
- 50: Main body case
- 60: Video display unit
- 61, 62: Center line
- 81,82, 131, 132, 133, 134: Audio output unit
- 90: Operation panel
- 100: Electronic circuit
- 110: Reverse side
- 120: Rotation mechanism (rotary hinge)

### DETAILED DESCRIPTION OF THE PREFERRED EMBODIMENTS

Referring now to the drawings, preferred embodiments of the invention are specifically described below.

### (Preferred embodiment 1)

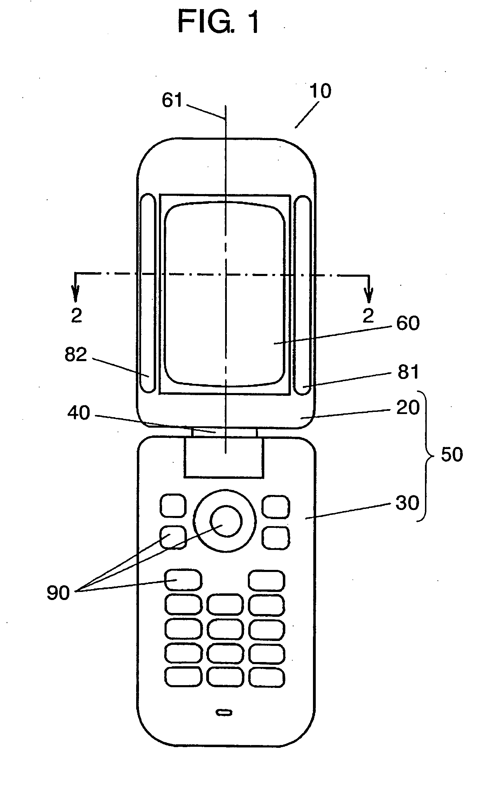

Fig. 1 is a front view of information terminal device in preferred embodiment 1 of the invention. The information terminal device is specifically a foldable mobile telephone, and an unfolded state is shown.

Recently, in the market of small information terminal devices represented by mobile telephones, not limited to the function of information transmission only, higher grades are demanded in video and audio aspects. Especially in the audio quality, as the function of music reception and distribution is sophisticated, there is a strong desire for upgrading of stereophonic reproduction for enjoying the music with an advanced reality. The information terminal device of the preferred embodiment is devised to meet such need, and has the configuration as shown in Fig. 1.

In Fig. 1, information terminal device (foldable mobile telephone) 10 comprises upper case 20, lower case 30, and main body case 50 coupling them by means of linkage 40. Upper case 20 includes rectangular video display unit 60 provided on its front side, and audio output units 81, 82 provided on the same plane as video display unit 60. Lower case 30 includes operation panel 90 composed of switches and others.

The outer shape of audio output units 81, 82 is formed like a track. The longer diameter side of the track shape of audio output unit 81 is disposed closely to one longer side of the rectangular shape of video display unit 60. The longer diameter side of the track shape of audio output unit 82 is disposed closely to other longer side of the rectangular shape of video display unit 60. One longer side and other longer side of the rectangular shape of video display unit 60 are opposite to each other. Thus, on both sides of center line 61 of video display unit 60, audio output unit 81 and audio output unit 82 are disposed symmetrically to each other. That is, audio output unit 81 and audio output unit 82 are disposed at both sides of mutually opposing two longer side of video display unit 60.

Speakers used as audio output unit 81 and audio output unit 82 are not limited to track shape, but speakers may be freely selected from the rectangular, elliptical and track shape.

In the case of rectangular shape of audio output units, the audio output units are mutually disposed symmetrically with respect to center line 61 of video display unit 60, and the longer sides of the outer shape of each audio output unit are disposed closely to the mutually opposing longer sides of video display unit 60.

In the case of elliptical shape of audio output units, the audio output units are mutually disposed symmetrically with respect to center line 61 of video display unit 60, and the longer diameters of the outer shape of each audio output unit are disposed closely to the mutually opposing longer sides of video display unit 60.

In the case of track shape or elliptical shape of audio output units 81, 82, the ratio of longer diameter and shorter diameter of the outer shape is 2.5 or more, and slim speakers of large aspect ratio are used. In the case of rectangular shape of audio output units 81, 82, the ratio of longer side and shorter side of the outer shape is 2.5 or more, and slim speakers of large aspect ratio are used.

In this configuration, by using slim speakers as audio output units 81, 82, information terminal device 10 has a wider screen, and video display unit 60 can be provided in a limited space. As a result, information terminal device 10 is reduced in size.

According to this configuration, in the information terminal device of the preferred embodiment, audio images produced from audio output units 81, 82 in stereophonic reproduction correspond to the video image displayed from video display unit 60, and reproduce reality and presence by stereophonic acoustics. That is, the human hearing sense, like the viewing sense, works in both lateral direction and vertical direction. Hence, for realistic stereophonic reproduction of sound corresponding to image, it is required to coincide between the video localization of video display unit 60 and audio localization of audio output units 81, 82, for the user of information terminal device 10.

In the information terminal device of the preferred embodiment, audio output units 81, 82 are disposed symmetrically on both sides of center line 61 in the longitudinal direction of video display unit 60. Accordingly, the straight line linking audio output unit 81 and audio output unit 82 is horizontal. Therefore, the audio localization of audio output units 81, 82 is in the center of straight line linking these two speakers when the output sound pressure levels from two speakers are equal to each other. The video localization of video display unit 60 is also in the center of rectangular screen. As a result, the video localization and audio localization coincide with each other.

Thus, by coincidence between video localization and audio localization of information terminal device 10, for example, when the image reproduced by video display unit 60 is moving picture, a difference is caused in output sound pressure levels from right and left speakers depending on the lateral motion of the moving picture, so that the audio image of audio output units 81, 82 can be moved in lateral direction. As a result, stereophonic sound field can be reproduced without any sense of strangeness.

As mentioned above, in the information terminal device of the preferred embodiment, at the time of stereophonic reproduction, audio localization delivered from audio output units 81, 82 corresponds to video localization displayed by video display unit 60, so that reality and presence by stereophonic acoustics can be reproduced.

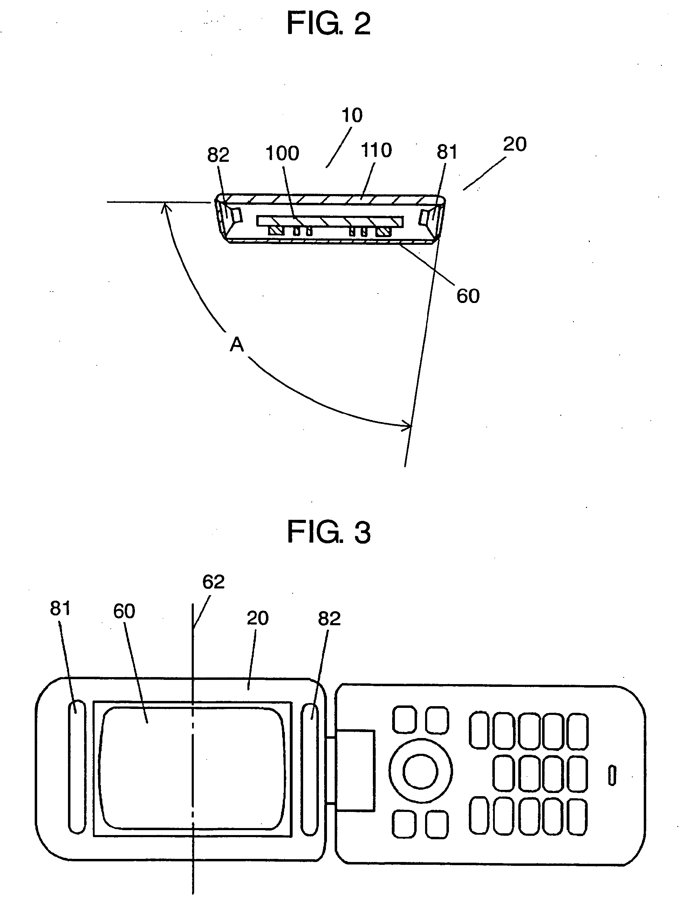

Referring next to Fig. 2, the layout angle of audio output units corresponding to the video display unit in the information terminal device of preferred embodiment 1 is explained. Fig. 2 shows essential parts in section 2-2 in the information terminal device shown in Fig. 1 of the invention.

In Fig. 2, information terminal device 10 has video display unit 60 at the front side (lower side in Fig. 2) of upper case 20. Inside of upper case 20, electronic circuit 100 is provided for controlling video display unit 60. Speakers are disposed at both sides of video display unit 60 as audio output units 81, 82.

At this time, the layout angle of audio output units 81, 82 corresponding to video display unit 60 is determined so that angle A formed between the front side of audio output units and reverse side 110 of video display unit may be set in a range of 0 degree to 90 degrees, supposing the angle to be 0 degree when the front side of video display unit and front side of audio output units are disposed on a same plane, and the angle to be 90 degrees when the front side of video display unit and front side of audio output units are disposed vertically. As a result, audio output units 81, 82 are mutually directed outside of upper case 20.

In this configuration, at the time of stereophonic reproduction, audio images produced from audio output units 81, 82 correspond to video image from video display unit 60, and reality and presence by stereophonic acoustics can be expanded. That is, if the sound is reproduced from information terminal device 10 reduced in size, sound diffuses as stereophonic sound, and sound field of wide service area can be formed, and the sense of presence can be expanded.

Moreover, by disposing the speakers at specified angle as audio output units 81, 82, video display unit 60 of maximum size can be disposed in a limited space of upper case 20.

Thus, according to the invention, in spite of the small size, an information terminal device sufficiently satisfying the requirements of reality and presence by stereophonic acoustics at the time of stereophonic reproduction can be presented.

Fig. 3 is a front view of other example of preferred embodiment 1 of the invention. In the information terminal device shown in Fig. 3, the longer side or longer diameter side of outer shape of audio output units is disposed closely to the corresponding shorter side of video display unit.

In Fig. 3, upper case 20 of the information terminal device includes rectangular video display unit 60 provided on its front side, and audio output units 81, 82 provided on the same plane as this video display unit 60.

The outer shape of audio output units 81, 82 is a track shape. The longer diameter side of the track shape of audio output unit 81 is disposed closely to one shorter side of the rectangular shape of video display unit 60. The longer diameter side of the track shape of audio output unit 82 is disposed closely to other shorter side of the rectangular shape of video display unit 60. One shorter side and other shorter side of the rectangular shape of video display unit 60 are opposite to each other. Thus, on both sides of center line 62 of video display unit 60, audio output unit 81 and audio output unit 82 are disposed symmetrically to each other. That is, audio output unit 81 and audio output unit 82 are disposed at both sides of two mutually opposing shorter sides of video display unit 60.

Speakers used as audio output units 81, 82 are not limited to track shape, but speakers may be freely selected from the rectangular, elliptical and track shape.

In the case of rectangular shape of audio output units, the audio output units are mutually disposed symmetrically with respect to center line 62 of video display unit 60, and the longer sides of the outer shape of each audio output unit are disposed closely to the mutually opposing shorter sides of video display unit 60.

In the case of elliptical shape of audio output units, the audio output units are mutually disposed symmetrically with respect to center line 62 of video display unit 60, and the longer diameters of the outer shape of each audio output unit are disposed closely to the mutually opposing shorter sides of video display unit 60.

As shown in Fig. 3, when the information terminal device is used in wide direction, video display unit 60 provided in the upper case 20 becomes a wide rectangular shape. In this case, as video display unit 60, a liquid crystal panel with aspect ratio of 3:4 to 9:16 may be used. In this case, in spite of liquid crystal panel of information terminal device represented by mobile telephone, an aspect ratio equivalent to that of liquid crystal panel of television receiver or the like is realized. As a result, together with stereophonic sound, information terminal device with excellent reality and presence not experienced before can be presented.

In preferred embodiment 1, mobile telephone is explained as an example of information terminal device. But not limited to this, it may be further widely applied and extended into personal digital assistant (PDA), small game machine, car navigation system, portable television, video camera monitor, and others.

### (Preferred embodiment 2)

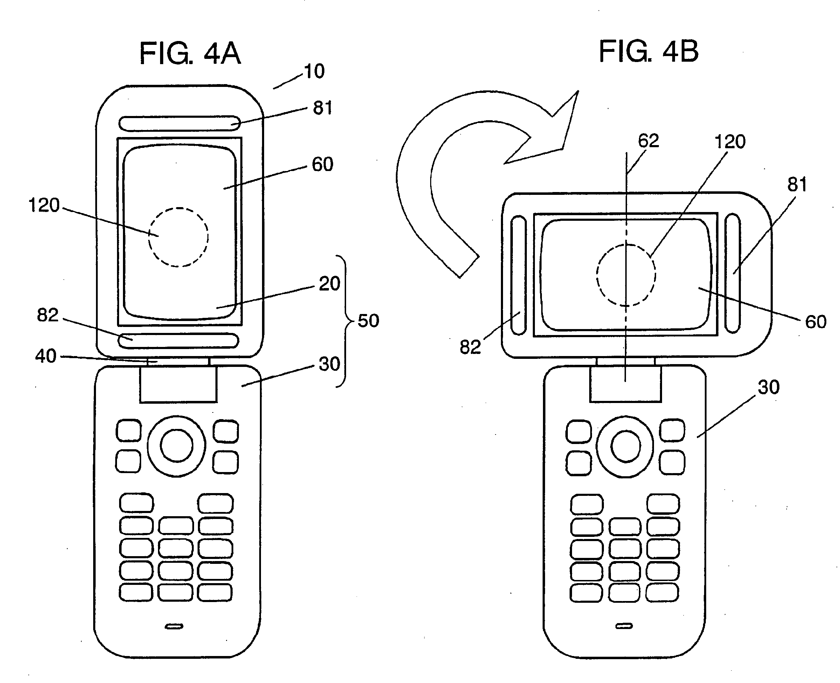

Fig. 4A is a front view of information terminal device in preferred embodiment 2 of the invention. Fig. 4B is a front view of rotated state of upper case of information terminal device shown in Fig. 4A.

In Fig. 4A, information terminal device (foldable mobile telephone) 10 comprises upper case 20, lower case 30, and main body case 50 coupling them by means of linkage 40. Upper case 20 includes rectangular video display unit 60 provided on its front side, and audio output units 81, 82 provided on the same plane as video display unit 60. Lower case 30 includes operation panel composed of switches and others. Upper case 20 can be folded on lower case 30 by means of linkage 40.

The outer shape of audio output units 81, 82 is formed like a track. The longer diameter side of the track shape of audio output unit 81 is disposed closely to one shorter side of the rectangular shape of video display unit 60. The longer diameter side of the track shape of audio output unit 82 is disposed closely to other shorter side of the rectangular shape of video display unit 60. One shorter side and other shorter side of the rectangular shape of video display unit 60 are opposite to each other.

Thus, on both sides of the center line of video display unit, audio output unit 81 and audio output unit 82 are disposed symmetrically. That is, audio output unit 81 and audio output unit 82 are disposed at mutually opposing two shorter sides of video display unit 60.

What this preferred embodiment 2 differs from preferred embodiment 1 is that information terminal device 10 is difference in direction and appearance while being carried and while being used. That is, rotation mechanism 120 is provided to rotate upper case 20 with respect to lower case 30, so that video display unit 60 may be used either in wide profile or in long profile. In information terminal device 10 of the preferred embodiment, a rotary hinge is used as rotation mechanism 120.

Audio output units 81 82 are of track shape, but rectangular or elliptical shape may be also used.

As shown in Fig. 4A, in the information terminal device of the preferred embodiment, audio output unit 81 is disposed in the upper part of video display unit 60, and audio output unit 82 is disposed in the lower part of video display unit 60. The longer side or longer diameter of outer shape of audio output units 81, 82 is disposed closely to mutually opposing shorter sides of video display unit 60, and disposed symmetrically on both sides of center line 62 of video display unit 60 shown in Fig. 4B.

In such configuration, information terminal device 10 is changed in profile while being carried and while being used. That is, when carrying information terminal device 10, it is folded as shown in Fig. 4A. By contrast, when video display unit 60 of information terminal device 10 is used, that is, when viewing the visual telephone or moving image, upper case 20 is rotated 90 degrees by rotary hinge 120, and video display unit 60 can be used by shifting from long profile in Fig. 4A to wide profile in Fig. 4B.

In this configuration, when information terminal device 10 of the preferred embodiment reproduces stereophonic sound, audio images produced from audio output units 81, 82 correspond to the video image displayed from video display unit 60, and reality and presence by stereophonic acoustics can be realized. That is, upper case 20 is rotated 90 degrees by rotary hinge 120, and video display unit 60 is shifted from long profile to wide profile, so that video display unit 60 of large aspect ratio is obtained while in used.

Since audio output units 81, 82 after rotation are disposed symmetrically to center line 62 in the longitudinal direction of video display unit 60, the video image of video display unit 60 of large aspect ratio and audio images of audio output units 81, 82 coincide with each other. As a result, in the invention, at the time of stereophonic reproduction, audio images produced from audio output units 81, 82 correspond to the video image of large aspect ratio displayed from video display unit 6, so that reality and presence by stereophonic acoustics can be realized.

In preferred embodiment 2, mobile telephone is explained as an example of information terminal device. But not limited to this, it may be further widely applied and extended into personal digital assistant (PDA), small game machine, car navigation system, portable television, video camera monitor, and others.

### (Preferred embodiment 3)

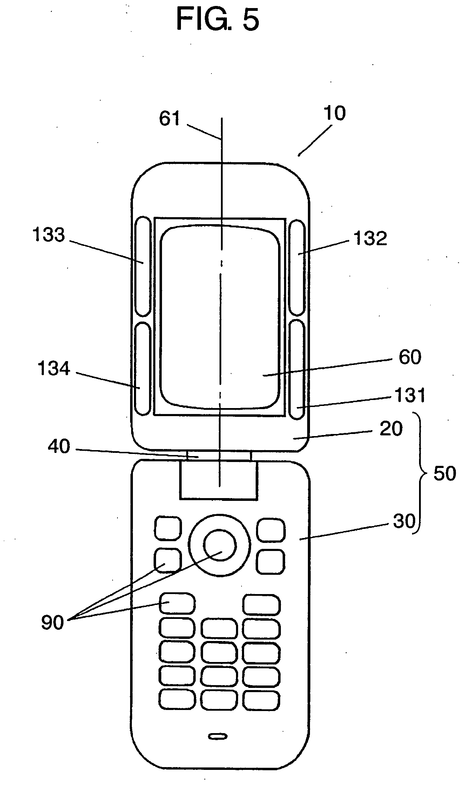

Fig. 5 is a front view of information terminal device in preferred embodiment 3 of the invention. In Fig. 5, information terminal device 10 comprises upper case 20, lower case 30, and main body case 50 coupling them by means of linkage 40. Upper case 20 includes rectangular video display unit 60 provided on its front side, and audio output units 131, 132, 133, 134 provided on the same plane as video display unit 60. Lower case 30 includes operation panel 90 composed of switches and others.

The outer shape of audio output units 131, 132, 133,134 is formed like a track. The longer diameter side of the track shape of audio output units 131, 132 is disposed closely to one longer side of the rectangular shape of video display unit 60. The longer diameter side of the track shape of audio output units 133, 134 is disposed closely to other longer side of the rectangular shape of video display unit 60. One longer side and other longer side of the rectangular shape of video display unit 60 are opposite to each other. On both sides of center line 61 of video display unit 60, audio output units 131, 132 and audio output units 133, 134 are disposed symmetrically with each other. That is, audio output units 131, 132 and audio output units 133, 134 are disposed on both sides of mutually opposite two longer sides of video display unit 60.

Speakers used as audio output units 131, 132, 133, 134 are not limited to track shape, but speakers may be freely selected from the rectangular, elliptical and track shape.

In preferred embodiment 3 shown in Fig. 5, what differs from preferred embodiment 1 is that audio output units 131, 132, 133, 134 are provided in upper case 20. The longer side (longer diameter) of outer shape of audio output units 131, 132, 133, 134 is disposed closely to the mutually opposite longer side of video display unit 60. That is, as audio output units, a total of four speakers are provided, two each at both sides of video display unit 60 at both sides of center line 61 of upper case 20.

In this configuration, at the time of stereophonic reproduction, audio images produced from four audio output units 131, 132, 133, 134 at the time of stereophonic reproduction correspond to the video image displayed from video display unit 60, and reality and presence by stereophonic acoustics can be realized. That is, if small and slim speakers are used as audio output units, the video localization of video display unit 60 and audio localization of audio output units 131, 132, 133, 134 coincide with each other.

Therefore, in the information terminal device of the preferred embodiment, without using the slim speakers in the shape of audio output units in preferred embodiment 1 shown in Fig. 1, that is, slim speakers having the longer diameter (longer side) nearly equal to the longer side of the video display unit, coincidence of video localization and audio localization can be achieved by using much smaller speakers.

Thus, by achieving coincidence of video localization and audio localization, for example, when the video reproduced by the video display unit is a moving picture, audio images of audio output units can be moved in vertical and lateral directions corresponding to the vertical and lateral motions of the moving picture, so that a satisfactory stereophonic sound field can be reproduced without any sense of strangeness.

The number of speakers as audio output units is not limited to four, but a plurality of speakers may be disposed symmetrically on both sides of the center line of the upper case.

In Fig. 5, the longer diameter (longer side) of outer shape of audio output units 131, 132, 133, 134 is disposed closely to each one of mutually opposite longer side of video display unit 60, but the information terminal device of preferred embodiment 3 is not limited to this configuration.

That is, although not shown in the diagram, the longer side or the longer diameter of outer shape of audio output units 131, 132, 133, 134 may be also disposed closely to each one of mutually opposite shorter side of video display unit 60. As a result, when information terminal device 10 is used in wide profile, video display unit 60 has a wide longitudinal shape as shown in Fig. 3, and if small slim speakers are used, video localization and audio localization of information terminal device 10 can be matched correctly.

In this case, video display unit 60 is realized in a liquid crystal panel of the aspect ratio of 3:4 to 9:16, and in spite of video display unit of information terminal device represented by mobile telephone, an aspect ratio equivalent to that of video display unit of television receiver or the like is realized. As a result, together with stereophonic sound, information terminal device with excellent reality and presence not experienced before can be presented.

Besides, in order that video display unit 60 may be used by shifting from long profile to wide profile, a rotation mechanism (hinge or the like) may be provided so as to rotate upper case 20 on lower case 30. In this case, the longer side (longer diameter) of outer shape of audio output units 131, 132, 133, 134 is disposed closely to each one of mutually opposite short sides of video display unit 60.

As a result, if small slim speakers are used, information terminal device 10 can be used differently when carrying and when using. That is, when carrying information terminal device 1, it can be folded. When using video display unit 60 of information terminal device 10, that is, when viewing visual telephone or moving picture, upper case 20 is rotated by 90 degrees by rotary hinge 120, and video display unit 60 can be changed from long profile to wide profile.

### INDUSTRIAL APPLICABILITY

The invention has the effect of reproducing reality and presence by stereophonic acoustics, at the time of stereophonic reproduction, by correspondence between audio images from audio output units and video image from video display unit, and can be further widely applied and extended into mobile telephone, personal digital assistant (PDA), small game machine, car navigation system, portable television, video camera monitor, and other information terminal devices.

## Claims

1. An information terminal device comprising:
a main body case,
a rectangular video display unit provided on the front side of the main body case, and
a plurality of audio output units disposed at a specified angle to the video display unit and formed in any one of rectangular, elliptical and track shape,
wherein the plurality of audio output units are disposed symmetrically to the center line of the video display unit, and the longer side or longer diameter of the outer shape of each audio output unit is disposed closely to either one of the mutually opposing longer side and shorter side of the video display unit.

2. The information terminal device of claim 1, wherein the layout angle of the audio output units corresponding to the video display unit is determined so that the angle formed between the front side of audio output units and reverse side of video display unit may be set in a range of 0 degree to 90 degrees, supposing the angle to be 0 degree when the front side of video display unit and front side of audio output units are disposed on a same plane, and the angle to be 90 degrees when the front side of video display unit and front side of audio output units are disposed vertically.

3. The information terminal device of claim 1, wherein the ratio of longer side or longer diameter of outer shape of the audio output unit, and the shorter side or shorter diameter of outer shape of the audio output unit is 2.5 or more.

4. The information terminal device of claim 2, wherein the ratio of longer side or longer diameter of outer shape of the audio output unit, and the shorter side or shorter diameter of outer shape of the audio output unit is 2.5 or more.

5. The information terminal device of claim 1, wherein the information terminal device is a mobile telephone capable of reproducing stereophonic sound.

6. The information terminal device of claim 2, wherein the information terminal device is a mobile telephone capable of reproducing stereophonic sound.

7. The information terminal device of claim 3, wherein the information terminal device is a mobile telephone capable of reproducing stereophonic sound.

8. The information terminal device of claim 4, wherein the information terminal device is a mobile telephone capable of reproducing stereophonic sound.

9. The information terminal device of claim 1, wherein the audio output units are provided in the upper part and lower part of the video display unit,
the longer side or longer diameter of outer shape of each audio output unit is disposed closely to each one of mutually opposite shorter sides of the video display unit,
the main body case includes an upper case having the video display unit and audio output units, and a lower case foldably coupled to the upper case by means of a linkage, and
the upper case has a rotation mechanism for rotating with respect to the lower case so that the video display unit may be used by shifting from long profile to wide profile.

10. The information terminal device of claim 9, wherein the layout angle of the audio output units corresponding to the video display unit is determined so that the angle formed between the front side of audio output units and reverse side of video display unit may be set in a range of 0 degree to 90 degrees, supposing the angle to be 0 degree when the front side of video display unit and front side of audio output units are disposed on a same plane, and the angle to be 90 degrees when the front side of video display unit and front side of audio output units are disposed vertically.

11. The information terminal device of claim 9, wherein the ratio of longer side or longer diameter of outer shape of the audio output unit, and the shorter side or shorter diameter of outer shape of the audio output unit is 2.5 or more.

12. The information terminal device of claim 10, wherein the ratio of longer side or longer diameter of outer shape of the audio output unit, and the shorter side or shorter diameter of outer shape of the audio output unit is 2.5 or more.

13. The information terminal device of claim 9, wherein the information terminal device is a mobile telephone capable of reproducing stereophonic sound.

14. The information terminal device of claim 10, wherein the information terminal device is a mobile telephone capable of reproducing stereophonic sound.

15. The information terminal device of claim 11, wherein the information terminal device is a mobile telephone capable of reproducing stereophonic sound.

16. The information terminal device of claim 12, wherein the information terminal device is a mobile telephone capable of reproducing stereophonic sound.

17. The information terminal device of claim 1, wherein the audio output units are disposed in a plurality at both sides of the video display unit.

18. The information terminal device of claim 2, wherein the audio output units are disposed in a plurality at both sides of the video display unit.

19. The information terminal device of claim 9, wherein the audio output units are disposed in a plurality at both sides of the video display unit.

20. The information terminal device of claim 10, wherein the audio output units are disposed in a plurality at both sides of the video display unit.
